(19)

Europäisches
Patentamt
European
Patent Office
Office européen
des brevets

(11) **EP 2 365 497 A2**

(12) **EUROPEAN PATENT APPLICATION**

(43) Date of publication:
**14.09.2011 Bulletin 2011/37**

(51) Int Cl.:
***H01G 9/20*** (2006.01)   ***H01M 2/08*** (2006.01)
***H01M 14/00*** (2006.01)

(21) Application number: **10193950.2**

(22) Date of filing: **07.12.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **10.03.2010 KR 20100021377**

(71) Applicant: **Samsung SDI Co., Ltd
Gyeonggi-do (KR)**

(72) Inventor: **Yang, Nam-Choul
Gyeonggi-do (KR)**

(74) Representative: **Walaski, Jan Filip
Venner Shipley LLP
20 Little Britain
London
EC1A 7DH (GB)**

(54) **Photoelectric device**

(57)    A photoelectric device includes first and second substrates on which first and second electrodes are respectively formed, arranged to face each other, an electrolyte injected into a gap between the first and second substrates through an electrolyte injection hole formed in the first substrate, and an injection hole sealing member for sealing the electrolyte injection hole. The injection hole sealing member includes a cover portion for covering an entrance end of the electrolyte injection hole and an insertion portion extending from the cover portion along the electrolyte injection hole.

FIG. 1

EP 2 365 497 A2

**Description**

The present invention relates to a photoelectric device and a manufacturing method thereof.

Recently, diverse studies have been conducted regarding a photoelectric device that converts light energy into electrical energy. The photoelectric device may be applied as one of the resources to replace fossil fuels. In particular, a solar cell using solar energy has drawn wide attraction.

While studies on the solar cell having a variety of driving principles are being conducted, wafer-type silicon or crystal solar cells using the p-n conjunction of a semiconductor are most popular. The wafer-type silicon or crystal solar cells have a drawback, however, in that the manufacturing costs are high due to the process characteristic of forming and handling a highly pure semiconductor material.

It is therefore an aspect of the present invention to provide an improved photoelectric device and a method for manufacturing thereof.

It is another aspect of the present invention to provide a photoelectric device having improved sealing performance at an electrolyte injection hole and a simplified sealing process, and a manufacturing method thereof.

Additional aspects will be set forth in part in the description which follows and, in part, will be apparent from the description, or may be learned by practice of the presented embodiments.

According to one or more embodiments of the present invention, a photoelectric device includes first and second substrates, on which first and second electrodes are respectively formed, arranged to face each other, an electrolyte injected into a gap between the first and second substrates through an electrolyte injection hole formed in the first substrate, and an injection hole sealing member for sealing the electrolyte injection hole. The injection hole sealing member may include a cover portion for covering an entrance end of the electrolyte injection hole and an insertion portion extending from the cover portion along the electrolyte injection hole.

The cover portion may have a size larger than that of the entrance end of the electrolyte injection hole, and may cover the electrolyte injection hole. The cover portion may be supported on the first substrate in a vicinity of the electrolyte injection hole.

A first sealing member may be disposed between the cover portion and the first substrate.

The insertion portion may be inserted in the electrolyte injection hole.

A second sealing member may be disposed between the insertion portion and an inner wall of the electrolyte injection hole. The second sealing member may extend toward the gap between the first and second substrate.

The cover portion and the insertion portion may be integrally formed.

The injection hole sealing member may be formed of a heat conductive material. The injection hole sealing member may include a metal material or a ceramic material.

The length of the insertion portion may be shorter than a sum of a thickness of the first substrate and a thickness of the gap between the first and second substrates.

The photoelectric device may further include a first sealing member disposed between the cover portion and the first substrate, and a second sealing member disposed between the insertion portion and an inner wall of the electrolyte injection hole. The first and second sealing members may be formed of the same material.

The first and second sealing members may be continuously and integrally formed.

According to one or more embodiments of the present invention, a method of manufacturing a photoelectric device includes preparing first and second substrates on which first and second electrodes are respectively formed, injecting an electrolyte into a gap between the first and second substrates through an electrolyte injection hole formed in the first substrate, preparing an injection hole sealing member for sealing the electrolyte injection hole, the injection hole sealing member comprising a cover portion for covering an entrance end of the electrolyte injection hole and an insertion portion extending from the cover portion along the electrolyte injection hole, adhering an auxiliary sealing member to at least a part of the injection hole sealing member, and sealing the electrolyte injection hole by using the injection hole sealing member.

The sealing operation includes a first operation of seating the injection hole sealing member in the electrolyte injection hole, and a second operation of pressing the injection hole sealing member to insert the insertion portion into the electrolyte injection hole. The insertion portion may be disposed closer, than the cover portion, to the gap between the first and second substrates.

In the second operation, the injection hole sealing member may be pressed until the cover portion is supported on the first substrate around the electrolyte injection hole.

In the second operation, the injection hole sealing member may be pressed against the electrolyte injection hole and the auxiliary sealing member adhering to the injection hole sealing member may be simultaneously heated.

In the second operation, the injection hole sealing member may be pressed by using a press having a heating unit.

In the preparing of the injection hole sealing member, the injection hole sealing member may be formed of a heat conductive material.

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:

FIG. 1 is a partially cut-away exploded oblique view of a photoelectric device constructed as an embodiment according to the principles of the present invention;

FIG. 2 is a cross-sectional view of the photoelectric device taken along line II-II of FIG. 1;

FIG. 3 is a cross-sectional view of the photoelectric device taken along line III-III of FIG. 1, for explaining the sealing structure of an electrolyte injection hole as an embodiment according to the principles of the present invention;

FIGS. 4A-4D are cross-sectional views of the photoelectric device for explaining the respective processes of sealing of the electrolyte injection hole as an embodiment according to the principles of the present invention;

FIGS. 5A-5H are cross-sectional views of the photoelectric device for explaining the manufacturing process of a photoelectric device according to an embodiment of the present invention; and

FIG. 6 is a flow chart illustrating a processes of sealing of the electrolyte injection hole as an embodiment according to the principles of the present invention; and

FIG. 7 is a flow chart illustrating a manufacturing process of a photoelectric device as an embodiment according to the principles of the present invention.

Unlike a silicon solar cell, a dye-sensitized solar cell mainly includes a photosensitive dye for receiving light having a wavelength of a visible light ray and generating excited electrons, a semiconductor material for accepting the excited electrons, and an electrolyte for reacting with electrons returning after passing through an external circuit. The dye-sensitized solar cell has a high photoelectric conversion efficiency compared to a contemporary solar cell. Thus, the dye-sensitized solar cell is expected as a next generation solar cell.

Reference will now be made in detail to embodiments, examples of which are illustrated in the accompanying drawings, wherein like reference numerals refer to the like elements throughout. In this regard, the present embodiments may have different forms and should not be construed as being limited to the description set forth herein. Accordingly, the embodiments are merely described below, by referring to the figures, to explain aspects of the present description.

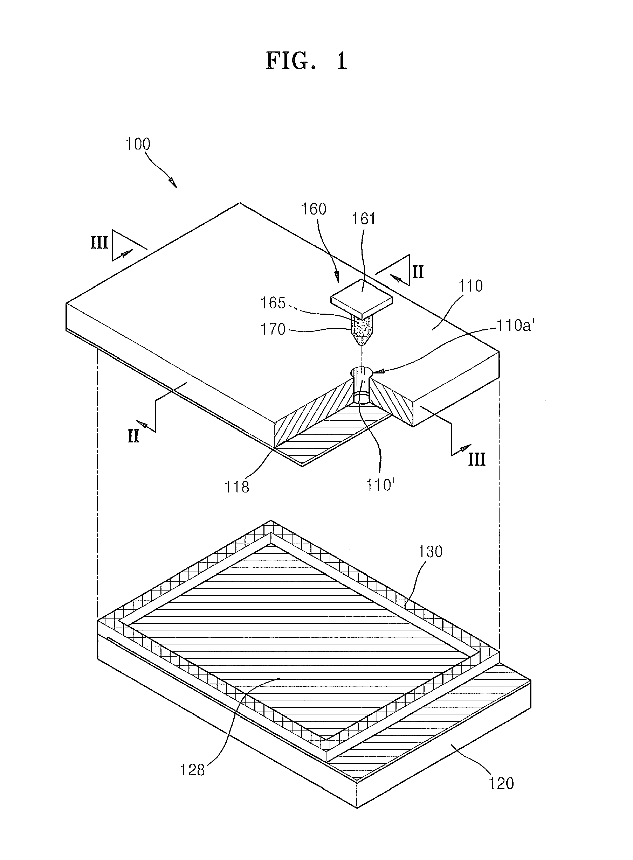

FIG. 1 is a partially cut-away exploded perspective view of a photoelectric device 100 according to an embodiment of the present invention. Referring to FIG. 1, in photoelectric device 100, a light receiving surface substrate 110 (also referred to as a "first substrate") and an opposite substrate 120 (also referred to as a "second substrate"), where functional layers 118 and 128 for performing photoelectric conversion are respectively formed, are arranged to face each other. Light receiving surface substrate 110 and opposite substrate 120 are combined to each other, by interposing a substrate sealing member 130 along edges of light receiving surface substrate 110 and opposite substrate 120. An electrolyte (not shown) is injected into a substrate gap G of photoelectric device 100, for example, through an electrolyte injection hole 110' formed in light receiving surface substrate 110, thereby forming photoelectric device 100. Substrate sealing member 130 seals the electrolyte so that the electrolyte will not leak to the outside of photoelectric device 100.

Functional layers 118 and 128 are respectively formed on light receiving surface substrate 110 and opposite substrate 120, and include a semiconductor layer for generating excited electrons from incident light and electrodes to collect the generated electrons and to draw the collected electrons to an external circuit. For example, ends of the electrodes constituting functional layers 118 and 128 may extend to the outside of substrate sealing member 130 for connection to an external circuit (not shown).

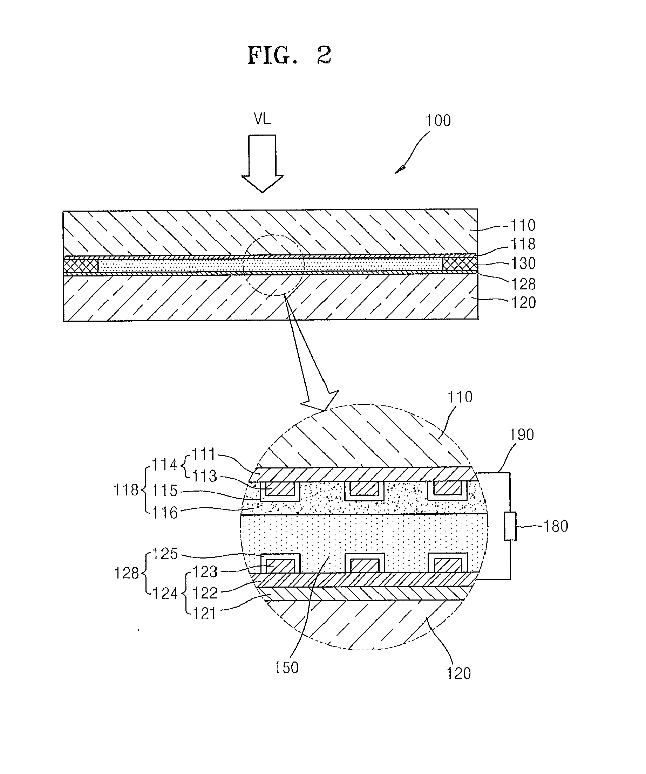

FIG. 2 is a cross-sectional view of photoelectric device 100 taken along line II-II of FIG. 1. Referring to FIG. 2, light receiving surface substrate 110 (first substrate) on which a light electrode 114 (first electrode) is formed and opposite substrate 120 (second substrate) on which an opposite electrode 124 (second electrode) is formed are arranged to face each other. A semiconductor layer 116 adsorbing a photosensitive dye that is excited by light VL is formed on light electrode 114. An electrolyte 150 is interposed between semiconductor layer 116 and opposite electrode 124. For example, light electrode 114 and semiconductor layer 116 together constitute functional layer 118, whereas opposite electrode 124 constitutes functional layer 128 of opposite substrate 120.

Light receiving surface substrate 110 and opposite substrate 120 are combined and sealed together with a predetermined gap by interposing substrate sealing member 130 therebetween. Electrolyte 150 fills the sealed space between light receiving surface substrate 110 and opposite substrate 120. Substrate sealing member 130 is formed to surround electrolyte 150, thereby preventing electrolyte 150 from leaking to the outside by forming the sealed space.

Light electrode 114 and opposite electrode 124 are connected by a lead wire 190 and electrically connected to each other via an external circuit 180. In a modular structure in which a plurality of photoelectric devices are connected in series/parallel, however, electrodes 114 and 124 of photoelectric device 100 may be connected in series/parallel and both ends of a connection portion of electrodes 114 and 124 may be connected to external circuit 180.

Light receiving surface substrate 110 may be formed of a transparent material or a material having a high light transmissivity. For example, light receiving surface substrate 110 may be formed of a glass substrate or a resin film. The resin film exhibiting flexibility is suitable for a display device requiring flexibility.

Light electrode 114 may include a transparent conductive film 111 and a grid electrode 113 having a mesh pattern formed on transparent conductive film 111. Transparent conductive film 111 is formed of a material having both of transparency and electric conductivity, for example, transparent conducting oxide (TCO) such as indium tin oxide (ITO), fluorine-doped tin oxide (FTO), or antimony-doped tin oxide (ATO). Grid electrode 113 is introduced to reduce the electric resistance of light electrode 114 and functions as a charge collection wire to collect electrons generated according to photoelectric conversion and provide a low-resistance current path. For example, grid electrode 113 may be formed on transparent conductive film 111, and may be formed of a metal material such as gold (Au), silver (Ag), or aluminium (A1) exhibiting superior electric conductivity, and patterned in form of a mesh.

Light electrode 114 functions as a negative pole of photoelectric device 100 and may have a high opening rate. Light VL input through light electrode 114 works as an excitation source of the photosensitive dye adsorbed onto semiconductor layer 116. Accordingly, the photoelectric conversion efficiency may increase as much as light VL is input. That is, the photoelectric conversion efficiency may increase as a function of the amount of light VL that is input through light electrode 114.

A protection layer 115 may be further formed on an outer surface of grid electrode 113. That is, protection layer 115 may be formed on a surface of grid electrode 113 that is not in contact with transparent conductive film. Protection layer 115 prevents an electrode damage generated due to an erosion of grid electrode 113 when grid electrode 113 contacts and reacts with electrolyte 150. Protection layer 115 may be formed of a material that does not react with electrolyte 150. For example, protection layer 115 may be formed of a hardened resin material.

Semiconductor layer 116 may be formed by using a semiconductor material used as a contemporary photoelectric device, for example, a metal oxide of metal such as cadmium (Cd), zinc (Zn), indium (In), lead (Pb), molybdenum (Mo), tungsten (W), antimony (Sb), titanium (Ti), silver (Ag), manganese (Mn), tin (Sn), zirconium (Zr), strontium (Sr), gallium (Ga), silicon (Si), and chromium (Cr). Semiconductor layer 116 may increase the photoelectric conversion efficiency by adsorbing a photosensitive dye. Semiconductor layer 116 may be formed by, for example, coating a paste in which semiconductor particles having a diameter of about 5 nm to 100 nm are dispersed, on light receiving surface substrate 110 where electrode 114 is formed. Then, a heat treatment or pressure treatment applying a predetermine heat or pressure is applied to light receiving surface substrate 110, thereby forming semiconductor layer 116.

Photosensitive dye adsorbed onto semiconductor layer 116 absorbs incident light VL passing through light receiving surface substrate 110, and thus, the electrons in the photosensitive dye are excited from a ground state to an excited state. The excited electrons are transferred to a conduction band of semiconductor layer 116 by using an electric combination between the photosensitive dye and semiconductor layer 116, pass through semiconductor layer 116, and arrive at light electrode 114. Then, the electrons are drawn to an exterior circuit through light electrode 114, forming a drive current to drive the external circuit.

The photosensitive dye may be adsorbed onto semiconductor layer 116 in a visible light ray band and may be formed of molecules causing rapid movement of electrons to semiconductor layer 116 in a light excitation state. The photosensitive dye may take any one of a liquid state, a semi-solid gel state, and a solid state. For example, a ruthenium (Ru) based photosensitive dye may be used as the photosensitive dye adsorbed onto semiconductor layer 116. Semiconductor layer 116 adsorbing the photosensitive dye may be obtained by dipping photoelectric device 100 where semiconductor layer 116 is formed, in a solution including a predetermined photosensitive dye.

A redox electrolyte including a pair of an oxidant and a reductant may be used as electrolyte 150. Also, a solid electrolyte, a gel electrolyte, and a liquid electrolyte may be all used as electrolyte 150.

Opposite substrate 120 arranged to face light receiving surface substrate 110 does not particularly require transparency, but opposite substrate 120 may be formed of a transparent material to receive light VL from both sides thereof in order to increase the photoelectric conversion efficiency, or formed of the same material as that of light receiving surface substrate 110. In particular, when photoelectric device 100 is installed at a structure such as a window frame and used for the purpose of building integrated photovoltaic (BIPV), both sides of photoelectric device 100 may have transparency in order not to block light VL coming into a room.

Opposite electrode 124 may include a transparent conductive film 121 and a catalyst layer 122 formed on transparent conductive film 121. Transparent conductive film 121 may be formed of a material exhibiting transparency and electric conductivity, for example, TCO such as ITO, FTO or ATO. Catalyst layer 122 may be formed of a material having a reduction catalyst function to provide electrons to electrolyte 150, for example, metal such as platinum (Pt), gold (Au), silver (Ag), copper (Cu), or aluminium (A1), a metal oxide such as tin oxide ($SnO_2$), or a carbon based material such as graphite.

Opposite electrode 124 functions as a positive pole of photoelectric device 100 and as a reduction catalyst to provide electrons to electrolyte 150. The photosensitive dye adsorbed onto semiconductor layer 116 absorbs light VL to be excited. The excited electrons are drawn to the external circuit via light electrode 114. The photosensitive dye losing the electrons is reduced by collecting the electrons provided by the oxidation of electrolyte 150. The oxidized electrolyte 150 is reduced by the electrons that pass through external circuit 180 and arrive at opposite electrode 124, thereby completing the operation process of photoelectric device 100.

A grid electrode 123 may be formed at opposite electrode 124, particularly on catalyst layer 122. Grid electrode 123 is introduced to reduce the electric resistance of opposite electrode 124, and provides a low-resistance current path to collect the electrons that pass through external circuit 180 and arrive to opposite electrode 124 and provide the collected electrons to electrolyte 150. For example, grid electrode 123 may be formed of a metal material such as gold (Au), silver (Ag), or aluminium (A1) exhibiting superior electric conductivity, and patterned in form of a mesh.

A protection layer 125 may be further formed on an outer surface of grid electrode 123. Protection layer 125 prevents an electrode damage generated due to the erosion of grid electrode 123 when grid electrode 123 contacts and reacts with electrolyte 150. Protection layer 125 may be formed of a material that does not react with electrolyte 150, for example, a hardened resin material.

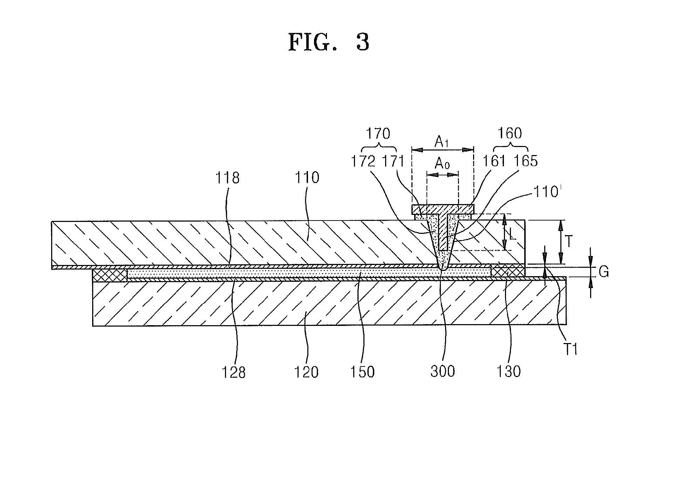

FIG. 3 is a cross-sectional view of photoelectric device 100 taken along line III-III of FIG. 1, for explaining the sealing structure of electrolyte injection hole 100'. Referring to FIG. 3, substrate sealing member 130 is provided between light receiving surface substrate 110 and opposite substrate 120 and along the edges of light receiving surface substrate 110 and opposite substrate 120. Light receiving surface substrate 110 and opposite substrate 120 are combined to each other, by applying a predetermined heat and pressure to substrate sealing member 130. Accordingly, a substrate gap G of an appropriate size is formed between light receiving surface substrate 110 and opposite substrate 120. Substrate gap G is filled with electrolyte 150. Electrolyte injection hole 110' for providing an injection path of electrolyte 150 may be formed in light receiving surface substrate 110. Electrolyte injection hole 110' is formed to penetrate light receiving surface substrate 110 and connected to substrate gap G. For example, electrolyte injection hole 110' may have a cylindrical shape.

Electrolyte injection hole 110' is sealed by an injection hole sealing member 160. Injection hole sealing member 160 may have a pin shape having a protruding portion 165 (hereinafter referred to as an "insertion portion") in a thicknesswise direction of light receiving surface substrate 110. That is, injection hole sealing member 160 may have an insertion portion extending in a direction perpendicular to a major surface of light receiving surface substrate 110. In detail, injection hole sealing member 160 includes a cover portion 161 covering the vicinity of an entrance 110a' of electrolyte injection hole 110' and an insertion portion 165 extending from cover portion 161 along electrolyte injection hole 110' and inserted in electrolyte injection hole 110'. Cover portion 161 and insertion portion 165 constitute injection hole sealing member 160. Cover portion 161 and insertion portion 165 may be integrally formed or formed as a unitary member by combining the cover portion and insertion portion before insertion into the electrolyte injection hole. Cover portion 161 of injection hole sealing member 160 closes entrance end 110a' of electrolyte injection hole 110', and insertion portion 165 of injection hole sealing member 160 fills electrolyte injection hole 110' in the thickness-wise direction of light receiving surface substrate 110, thereby forming a dual sealing structure to seal electrolyte 150. That is, by sealing electrolyte injection hole 110' using injection hole sealing member 160, the dual sealing structure may be implemented by one-time assembly of injection hole sealing member 160.

In a dual sealing structure constructed as a comparative example, the sealing of electrolyte injection hole 110' is implemented by firstly filling the inside of electrolyte injection hole 110' by a first injection hole sealing member and secondly closing the entrance end of electrolyte injection hole 110' by a second injection hole sealing member. In this dual sealing structure constructed as the comparative example, the numbers of the sealing members and the sealing processes increase and the structure is complicated because separate adhesion members are needed for fixing the first and second sealing members. In the embodiment shown in FIG. 3, since cover portion 161 covering entrance end 110a' of electrolyte injection hole 110' and insertion portion 165 filling the inside of electrolyte injection hole 110' are integrally formed in one member, the dual sealing structure may be implemented by a one-time sealing. Thus, intrusion of foreign harmful materials may be prevented, deterioration of electrolyte 150 may be prevented, and leakage of electrolyte 150 may be effectively avoided.

An auxiliary sealing member 170 may be further provided between injection hole sealing member 160 and light receiving surface substrate 110 where electrolyte injection hole 110' is formed. Auxiliary sealing member 170 may closely keep a seal between injection hole sealing member 160 and light receiving surface substrate 110. Electrolyte 150 filled in substrate gap G may be effectively sealed by auxiliary sealing member 170. Auxiliary sealing member 170 may be continuously and integrally formed to simultaneously cover an underside of cover portion 161 and insertion portion 165 of injection hole sealing member 160. Auxiliary sealing member 170 may include a first sealing member 171 provided between cover portion 161 and light receiving surface substrate 110 and a second sealing member 172 provided between insertion portion 165 and inner wall 110b' of electrolyte injection hole 110'.

Cover portion 161 closely contacts the vicinity of entrance end 110a' around electrolyte injection hole 110' of light receiving surface substrate 110 to seal entrance end 110a' of electrolyte injection hole 110', thereby preventing the intrusion of foreign harmful materials through electrolyte injection hole 110'. Cover portion 161 has a cross-sectional dimension larger than that of an aperture formed by entrance end 110a' of electrolyte injection hole 110', and cover portion 161 surrounds the aperture and covers electrolyte injection hole 110'. In some embodiments according to the principles of the present invention, cover portion 161 may be formed to have an area larger than an area of entrance end 110a' of electrolyte injection hole 110'. That is,

$$A1 > A0 \qquad (1)$$

where A1 is the area of cover portion 161, and A0 is the area of entrance end 110a' of electrolyte injection hole 110'. Cover portion 161 may be supported on light receiving surface substrate 110 around electrolyte injection hole 110'.

First sealing member 171 may be provided between cover portion 161 and light receiving surface substrate 110. First sealing member 171 may closely keep a seal between cover portion 161 and light receiving surface substrate 110, and may couple cover portion 161 and light receiving surface substrate 110.

Insertion portion 165 may extend by a predetermined length L along electrolyte injection hole 110'. Insertion portion 165 may have a sufficient length to prevent the intrusion of foreign harmful materials and the volatilization or leakage of electrolyte 150. For stable assembly between light receiving surface substrate 110 and opposite substrate 120, however, length L of insertion portion 165 may be designed to be not greater than a sum of thickness T of light receiving surface substrate 110 and the thickness of substrate gap G. That is,

$$L \leq T + G \qquad (2)$$

Alternatively, length L of insertion portion 165 may be formed to be not greater than a sum of thickness T of light receiving surface substrate 110, thickness T1 of functional layer 118 formed on light receiving surface substrate 110, and the thickness of substrate gap G. That is,

$$L \leq T + T1 + G \qquad (3)$$

Substrate gap G is directly related to the height of substrate sealing member 130 disposed between light receiving surface substrate 110 and opposite substrate 120. Second sealing member 172 may be provided between insertion portion 165 and the inner wall of electrolyte injection hole 110'. Second sealing member 172 may closely keep a seal between insertion portion 165 and inner wall 110b' of electrolyte injection hole 110' and may couple insertion portion 165 and inner wall 110b' of electrolyte injection hole 110'.

In some embodiments, second sealing member 172 may extend toward substrate gap G filled with electrolyte 150. Second sealing member 172 may be pushed toward the substrate gap G from electrolyte injection hole 110' due to the pressure of injection hole sealing member 160 during the assembly process. As a result, second sealing member 172 may extend toward substrate gap G to be formed at position 300. The sealing performance of electrolyte 150 may be improved accordingly. Second sealing member 172 contacting electrolyte 150 may have chemical resistance to electrolyte 150. Second sealing member 172 having chemical resistance may effectively restrict the leakage of electrolyte 150.

Any material capable of sealing electrolyte 150 may be sufficiently used as first and second sealing members 171 and 172. In an embodiment, first and second sealing members 171 and 172 may be formed of a material having selective flexibility according to a temperature environment. That is, first and second sealing members 171 and 172 may have sufficient flexibility to fill the gap between injection hole sealing member 160 and electrolyte injection hole 110' by being injected into electrolyte injection hole 110' along injection hole sealing member 160, in a high temperature environment, and may firmly adhere to the vicinity of electrolyte injection hole 110' or inner wall 110b' of electrolyte injection hole 110' by being hardened in a normal operation temperature range.

In general, since photoelectric device 100 operates in a temperature range of about 50°C to 80°C, first and second sealing members 171 and 172 may include a resin based material having flexibility in a temperature range of about 80°C to 180°C. In detail, first and second sealing members 171 and 172 may be formed of hot melt resin, or may include ethylvinylacetate, polyolefin, silicon, ionomer, and a reformed resin based material thereof. If necessary, inorganic filler such as $SiO_2$, $Al_2O_3$, or $TiO_2$ may be dipped in the resin based material.

Not only the temperature sensitive material exhibiting a difference in flexibility according to the temperature environment, but also a photosensitive material exhibiting a difference in flexibility according to light emission, for example, may be used as first and second sealing members 171 and 172. If necessary, a separate light hardening process to harden first and second sealing members 171 and 172 may be performed.

Any material capable of preventing intrusion of foreign harmful materials such as moisture may suffice for injection hole sealing member 160. In an embodiment, injection hole sealing member 160 may be formed of a heat conductive material to supply melting heat to first and second sealing members 171 and 172. For example, injection hole sealing member 160 may be formed of a metal material or a ceramic material. The melting heat supplied to first and second sealing members 171 and 172 via injection hole sealing member 160 makes first and second sealing members 171 and 172 in a melted or semi-melted state so as to provide flexibility.

In an embodiment, first and second sealing members 171 and 172 may be formed in an assembly process in which injection hole sealing member 160 is inserted in electrolyte injection hole 110'. That is, first and second sealing members 171 and 172 may be coated on the surface of injection hole sealing member 160 to fill between insertion portion 165 and electrolyte injection hole 110', and between cover portion 161 and light receiving surface substrate 110.

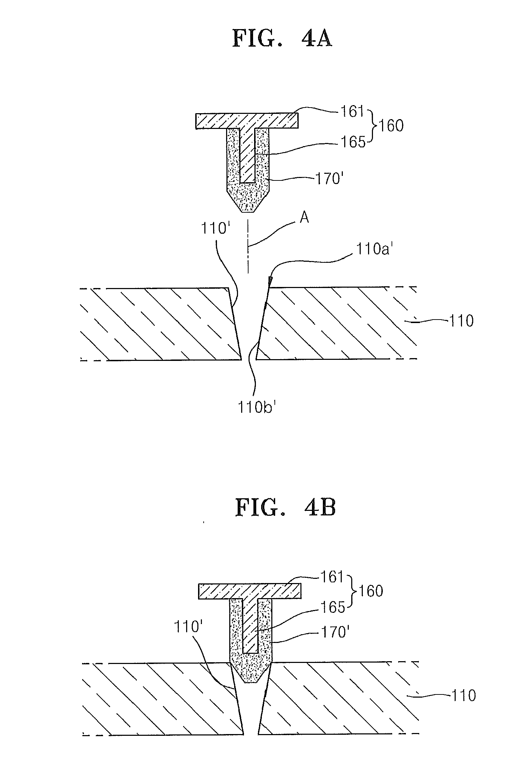

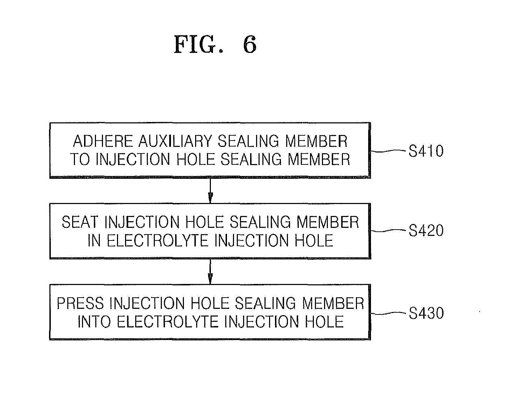

FIGS. 4A-4D are cross-sectional views of light receiving surface substrate 110, injection hole sealing member 160 and auxiliary sealing member 170 during a processes of sealing of the electrolyte injection hole as an embodiment according to the principles of the present invention, and FIG. 6 is a flow chart illustrating the processes of sealing of the electrolyte injection hole as the embodiment according to the principles of the present invention. First, referring to FIG. 4A, a sufficient amount of an auxiliary sealing member 170' is adhered to injection hole sealing member 160 before injection hole sealing member 160 is inserted in electrolyte injection hole 110' (step S410). Auxiliary sealing member 170' may be adhered to the vicinity of insertion portion 165 of injection hole sealing member 160. In an embodiment according to the principles of the present invention, a sufficient amount of auxiliary sealing member 170' may be adhered to the vicinity of insertion portion 165 by dipping injection hole sealing member 160 into a bath (not shown) containing auxiliary sealing member 170' in a liquid or paste state. In another embodiment according to the principles of the present invention, auxiliary sealing member 170' in a solid state may be attached to the vicinity of insertion portion 165 and then a predetermined heat is applied to insertion portion 165 attached with the solid state auxiliary sealing member 170' to make auxiliary sealing member 170' in a melted or semi-melted state having a sufficient flexibility.

Next, as illustrated in FIG. 4B, injection hole sealing member 160 to which sealing member 170' is attached is seated in electrolyte injection hole 110' (step S420). Injection hole sealing member 160 is inserted in electrolyte injection hole 110' with cover portion 161 up and insertion portion 165 down. That is, insertion portion 165 of injection hole sealing member 160 is disposed closer, than cover portion 161, to a surface of light receiving surface substrate 110 that is facing electrolyte 150.

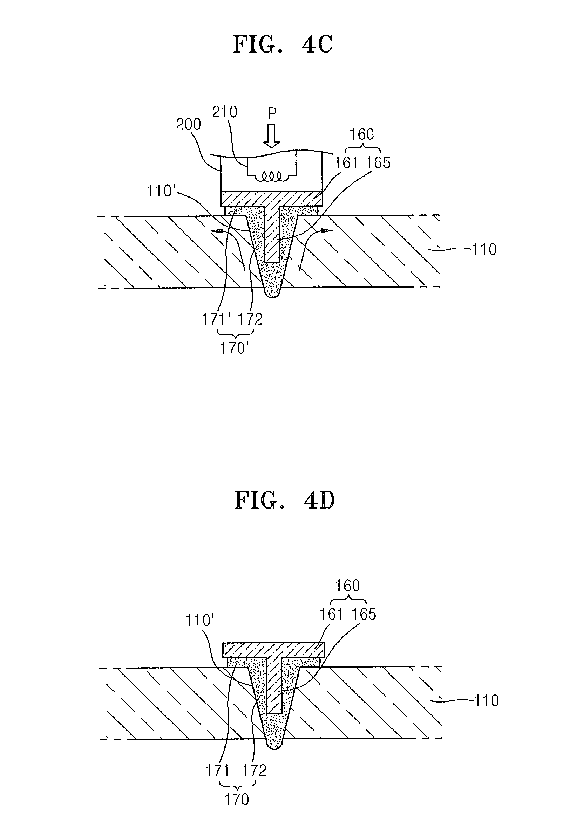

Referring to FIG. 4C, injection hole sealing member 160 is forcibly inserted in electrolyte injection hole 110' to be thus assembled (step S430). Injection hole sealing member 160 is inserted in electrolyte injection hole 110' by applying an appropriate press pressure P. For example, injection hole sealing member 160 is pushed into electrolyte injection hole 110' according to the pressure of a press 200. Insertion portion 165 of injection hole sealing member 160 is inserted in electrolyte injection hole 110'. Injection hole sealing member 160 may be pressed until cover portion 161 is supported on light receiving surface substrate 110 around electrolyte injection hole 110'.

In an embodiment according to the principles of the present invention, auxiliary sealing member 170' adhering to injection hole sealing member 160 has flexibility by applying a predetermined heat together with press pressure P. For example, the pressing and heating may be simultaneously performed by installing a heating unit 210 in press 200 that presses injection hole sealing member 160 against electrolyte injection hole 110'.

As insertion portion 165 of injection hole sealing member 160 is inserted in electrolyte injection hole 110', an excessive amount of auxiliary sealing member 170' adhering to the vicinity of insertion portion 165 is pushed to the outside of a limited space of electrolyte injection hole 110' and moved toward light receiving surface substrate 110 to form first portion 171' of auxiliary sealing member 170'. Also, a second portion 172' of auxiliary sealing member 170' remains and fills the inside of electrolyte injection hole 110'. First portion 171 forms a flange that extends radically outwardly from a longitudinal axis A symmetrically centred through second portion 172'.

As illustrated in FIGS. 4C and 4D, first portion 171' of auxiliary sealing member 170' forms first sealing member 171 that fills the space between cover portion 161 and light receiving surface substrate 110 at the outside of electrolyte injection hole 110'. Second portion 172' of auxiliary sealing member 170' forms second sealing member 172 that fills the space between insertion portion 165 and inner wall 110b' of electrolyte injection hole 110'. Then, first and second sealing members 171 and 172 are cooled under a predetermined temperature. As a result, first and second sealing members 171 and 172 may be firmly attached to light receiving surface substrate 110 around electrolyte injection hole 110' and inner wall 110b' of electrolyte injection hole 110', respectively, and may be sufficiently and closely contacted thereto. First sealing member 171 is interposed to form a seal between one major surface of light receiving surface substrate 110 and the spaced-apart under side of cover portion 161, while second sealing member 172 forms a seal between inner walls 110b' of electrolyte injection hole 110' and insertion portion 165. Insertion portion 165 forces the walls of second sealing member 172 outwardly from a longitudinal axis and secure it against the conical walls of electrolyte injection hole 110'.

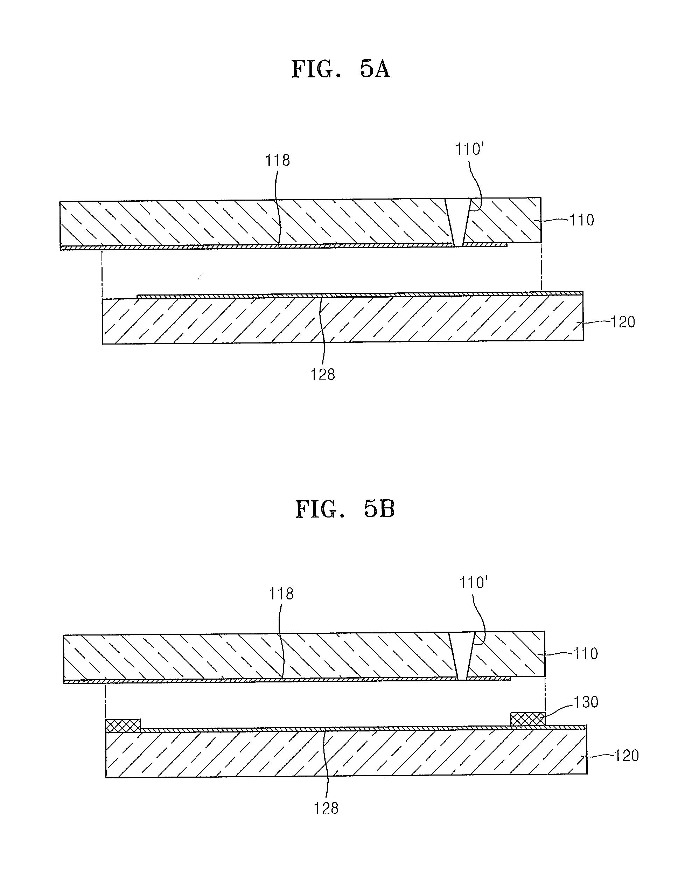

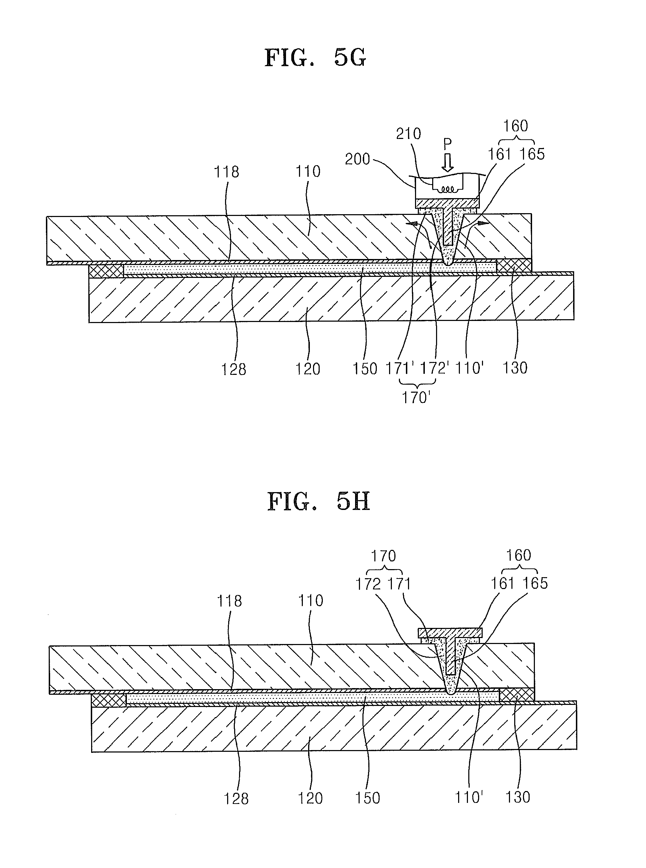

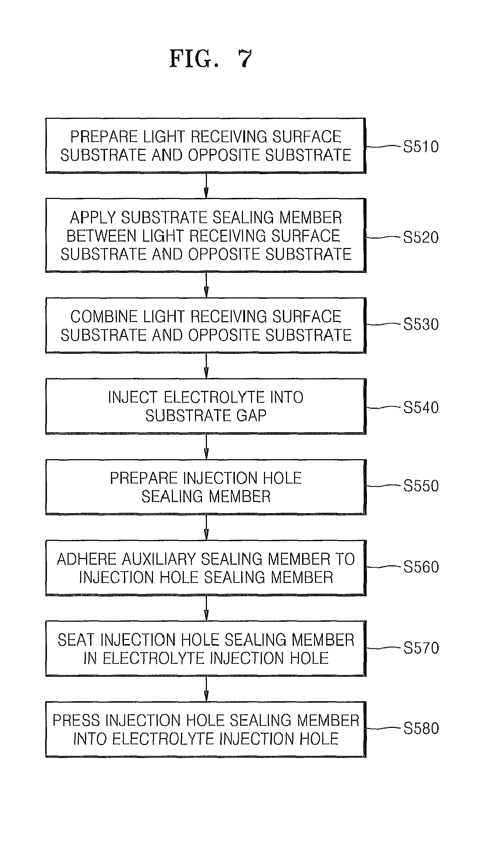

FIGS. 5A-5H are cross-sectional views of a photoelectric device during a manufacturing process as an embodiment according to the principles of the present invention, and FIG. 7 is a flow chart illustrating the manufacturing process of the photoelectric device as the embodiment according to the principles of the present invention. First, as shown in FIG. 5A, light receiving surface substrate 110 where functional layer 118 for performing photoelectric conversion is formed, and opposite substrate 120 where functional layer 128 for performing photoelectric conversion is formed, are prepared (step S510). Functional layers 118 and 128 include the semiconductor layer for receiving light and generating excited electrons and the electrodes for collecting the generated electrons and drawing the collected electrons to the outside. Electrolyte injection hole 110' for injecting an electrolyte is formed in at least one of light receiving surface substrate 110 and opposite substrate 120. For example, electrolyte injection hole 110' may be formed in light receiving surface substrate 110, as is illustrated in FIG. 5A.

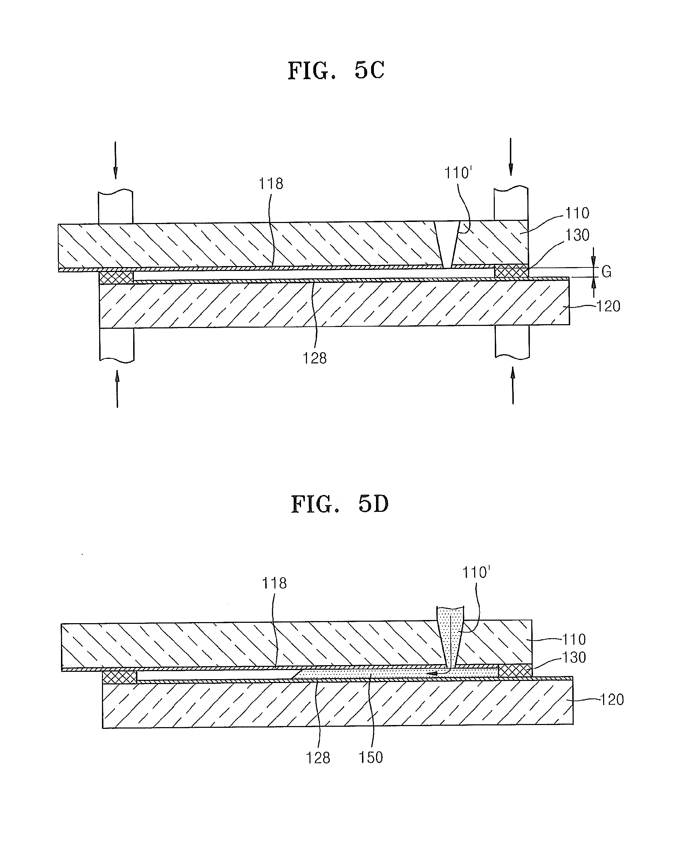

Next, as shown in FIG. 5B, light receiving surface substrate 110 and opposite substrate 120 are arranged to face each other and substrate sealing member 130 is arranged between light receiving surface substrate 110 and opposite substrate 120, and along the edges of light receiving surface substrate 110 and opposite substrate 120 (step S520). For example, a hot melt film as substrate sealing member 130 is arranged along the edges of opposite substrate 120. Then, as shown in FIG. 5C, predetermined heat and pressure is applied to the hot melt film so that light receiving surface substrate 110 and opposite substrate 120 are combined to each other, thereby forming substrate gap G to be filled with the electrolyte (step S530). Next, as shown in FIG. 5D, electrolyte 150 is injected through electrolyte injection hole 110' by applying an appropriate pressure thereto. Electrolyte 150 is injected to fill substrate gap G (step S540).

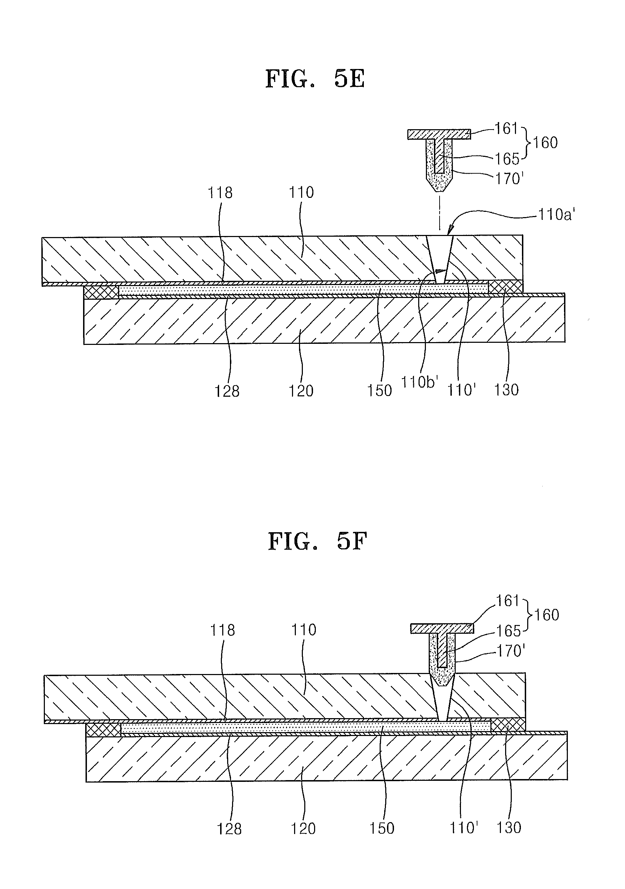

Injection hole sealing member 160 is prepared simultaneously with or immediately following the above-described processes (step 550). For example, as illustrated in FIG. 5E, injection hole sealing member 160 includes cover portion 161 having a plate shape to cover the vicinity of entrance end 110a' of electrolyte injection hole 110' and insertion portion 165 extending from cover portion 161 along electrolyte injection hole 110' and inserted in electrolyte injection hole 110'.

Auxiliary sealing member 170' in a sufficient amount adheres to injection hole sealing member 160 (step S560). For example, auxiliary sealing member 170' may be attached to the vicinity of insertion portion 165 of injection hole sealing member 160. In an embodiment according to the principles of the present invention, auxiliary sealing member 170' in a sufficient amount may be attached to the vicinity of insertion portion 165 constituting a lower portion of injection hole sealing member 160 by dipping injection hole sealing member 160 in a bath (not shown) containing auxiliary sealing member 170' in a liquid or paste state. The flexibility of auxiliary sealing member 170' adhering to injection hole sealing member 160 may be maintained by supplying a predetermined heat through injection hole sealing member 160. In another embodiment according to the principles of the present invention, auxiliary sealing member 170' may be made in a melted state or a semi-melted state having a sufficient flexibility by attaching an auxiliary sealing member 170' in a solid state to injection hole sealing member 160 and applying a predetermined heat to auxiliary sealing member 170' via injection hole sealing member 160.

Auxiliary sealing member 170' adhering to injection hole sealing member 160 is heated via injection hole sealing member 160, and thus, has a sufficient flexibility to fill electrolyte injection hole 110' with injection hole sealing member 160 in a high temperature environment.

Next, electrolyte injection hole 110' is sealed by using the prepared injection hole sealing member 160 (step S570). First, injection hole sealing member 160 is seated in electrolyte injection hole 110' (FIG. 5F). Injection hole sealing member 160 is seated in electrolyte injection hole 110' with cover portion 161 of injection hole sealing member 160 up and insertion portion 165 of injection hole sealing member 160 down. Next, as shown in FIG. 5G, injection hole sealing member 160 is pressed to be inserted in electrolyte injection hole 110' (step S580. In an embodiment according to the principles of the present invention, insertion portion 165 of injection hole sealing member 160 is inserted in electrolyte injection hole 110' by applying an appropriate press pressure P against injection hole sealing member 160. Injection hole sealing member 160 may be pressed until cover portion 161 of injection hole sealing member 160 is supported on light receiving surface substrate 110.

In an embodiment according to the principles of the present invention, pressing and heating may be simultaneously performed as heating unit 210 is provided in press 200 for pressing injection hole sealing member 160. For facilitating heat transfer, injection hole sealing member 160 may be formed of a heat conductive material such as a metal or ceramic material.

As illustrated in FIG. 5G, injection hole sealing member 160 to which auxiliary sealing member 170' is attached is input into electrolyte injection hole 110' by press pressure P. As insertion portion 165 of injection hole sealing member 160 is input into electrolyte injection hole 110', an excessive amount of auxiliary sealing member 170' adhering to the vicinity of insertion portion 165 is pushed toward light receiving surface substrate 110 from the limited space of electrolyte injection hole 110' to form first portion 171' of auxiliary sealing member 170', and second portion 172' of auxiliary sealing member 170' remains and fills in electrolyte injection hole 110'. First portion 171' of auxiliary sealing member 170' forms first sealing member 171 that fills the space between cover portion 161 and light receiving surface substrate 110 from the outside of electrolyte injection hole 110'. Second portion 172' of auxiliary sealing member 170' forms second sealing member 172 that fills the space between insertion portion 165 and inner wall 110b' of electrolyte injection hole 110'. First and second sealing members 171 and 172 that are cooled under a predetermined temperature may be firmly attached to light receiving surface substrate 110 around electrolyte injection hole 110' and inner wall 110b' of electrolyte injection hole 110', respectively, and may be sufficiently and closely contacted thereto.

As described above, according to the one or more of the above embodiments of the present invention, a photoelectric device having improved sealing performance at an electrolyte injection hole and a simplified sealing process, and a manufacturing method thereof, are provided. As the first sealing for filling the inside of the electrolyte injection hole and the second sealing for closing the entrance end of the electrolyte injection hole are provided, a dual sealing structure is implemented by one-time sealing process. Thus, the intrusion of foreign harmful materials may be prevented, the deterioration of the electrolyte may be prevented, and the leakage of the electrolyte may be effectively prevented.

It should be understood that the exemplary embodiments described herein should be considered in a descriptive sense only and not for purposes of limitation. Descriptions of features or aspects within each embodiment should typically be considered as available for other similar features or aspects in other embodiments.

## Claims

1. A photoelectric device, comprising:

   first and second substrates arranged to face each other, on which first and second electrodes are respectively formed;
   an electrolyte injected into a gap between the first and second substrates through an electrolyte injection hole extending through the first substrate; and
   an injection hole sealing member (160) sealing the electrolyte injection hole, the injection hole sealing member comprising a cover portion (161) covering an entrance end of the electrolyte injection hole and an insertion portion (165) extending from the cover portion and through the electrolyte injection hole.

2. The photoelectric device of claim 1, wherein the cover portion is larger than the entrance end of the electrolyte injection hole.

3. The photoelectric device of claim 1 or 2, wherein the cover portion is supported on the first substrate in a vicinity of the electrolyte injection hole.

4. The photoelectric device of claim 3, wherein a first auxiliary sealing member (171, 171') is disposed between the cover portion and the first substrate.

5. The photoelectric device of claim 4, wherein a second auxiliary sealing member (172, 172') is disposed between the insertion portion and an inner wall of the electrolyte injection hole.

6. The photoelectric device of claim 5, wherein the second auxiliary sealing member extends toward the gap between the first and second substrate.

7. The photoelectric device of claim 5 or 6, wherein the first and the second auxiliary sealing members are made of the same material.

8. The photoelectric device of any one of claims 5 to 7, wherein the first and second auxiliary sealing members are integrally formed.

9. The photoelectric device of any one of the preceding claims, wherein the injection hole sealing member (160) is formed of a heat conductive material.

10. The photoelectric device of claim 9, wherein the injection hole sealing member is formed of one of a metal material and a ceramic material.

11. The photoelectric device of any one of the preceding claims, wherein the length of the insertion portion (165) is shorter than a sum of a thickness of the first substrate and a thickness of the gap between the first and second substrates.

12. A method of manufacturing a photoelectric device, the method comprising:

    preparing first and second substrates on which first and second electrodes are respectively formed;
    injecting an electrolyte into a gap between the first and second substrates through an electrolyte injection hole formed in the first substrate;
    preparing an injection hole sealing member for sealing the electrolyte injection hole, the injection hole sealing member comprising a cover portion for covering an entrance end of the electrolyte injection hole and an insertion portion extending from the cover portion for insertion into the electrolyte injection hole; and
    sealing the electrolyte injection hole by inserting the injection hole sealing member into the injection hole.

13. The method of claim 12, further comprising adhering an auxiliary sealing member to at least a part of the injection hole sealing member before inserting the injection hole sealing member into the injection hole.

14. The method of claim 13, comprising pressing the injection hole sealing member against the electrolyte injection hole and simultaneously heating the auxiliary sealing member.

15. The method of claim 14, comprising pressing the injection hole sealing member using a press having a heating unit.

# FIG. 1

# FIG. 2

FIG. 3

FIG. 4A

FIG. 4B

# FIG. 4C

# FIG. 4D

FIG. 5A

FIG. 5B

FIG. 5C

FIG. 5D

## FIG. 5E

161 ⎱
165 ⎰ 160
170'

118    110
110a'

128    120    150    110b'  110'  130

## FIG. 5F

161 ⎱
165 ⎰ 160
170'

118    110

128    120    150    110'   130

# FIG. 5G

# FIG. 5H

# FIG. 6

| | |
|---|---|
| ADHERE AUXILIARY SEALING MEMBER TO INJECTION HOLE SEALING MEMBER | S410 |
| ↓ | |
| SEAT INJECTION HOLE SEALING MEMBER IN ELECTROLYTE INJECTION HOLE | S420 |
| ↓ | |
| PRESS INJECTION HOLE SEALING MEMBER INTO ELECTROLYTE INJECTION HOLE | S430 |

# FIG. 7

```
┌─────────────────────────────────┐
│ PREPARE LIGHT RECEIVING SURFACE │───S510
│ SUBSTRATE AND OPPOSITE SUBSTRATE│
└─────────────────────────────────┘
                 │
                 ▼
┌─────────────────────────────────┐
│   APPLY SUBSTRATE SEALING MEMBER│
│ BETWEEN LIGHT RECEIVING SURFACE │───S520
│ SUBSTRATE AND OPPOSITE SUBSTRATE│
└─────────────────────────────────┘
                 │
                 ▼
┌─────────────────────────────────┐
│   COMBINE LIGHT RECEIVING SURFACE│───S530
│ SUBSTRATE AND OPPOSITE SUBSTRATE│
└─────────────────────────────────┘
                 │
                 ▼
┌─────────────────────────────────┐
│      INJECT ELECTROLYTE INTO    │───S540
│         SUBSTRATE GAP           │
└─────────────────────────────────┘
                 │
                 ▼
┌─────────────────────────────────┐
│      PREPARE INJECTION HOLE     │───S550
│         SEALING MEMBER          │
└─────────────────────────────────┘
                 │
                 ▼
┌─────────────────────────────────┐
│ ADHERE AUXILIARY SEALING MEMBER TO│───S560
│   INJECTION HOLE SEALING MEMBER │
└─────────────────────────────────┘
                 │
                 ▼
┌─────────────────────────────────┐
│SEAT INJECTION HOLE SEALING MEMBER│───S570
│   IN ELECTROLYTE INJECTION HOLE │
└─────────────────────────────────┘
                 │
                 ▼
┌─────────────────────────────────┐
│PRESS INJECTION HOLE SEALING MEMBER│───S580
│  INTO ELECTROLYTE INJECTION HOLE│
└─────────────────────────────────┘
```